# EUROPÄISCHE PATENTSCHRIFT

(11) **EP 2 475 486 B1**
(45) Veröffentlichungstag und Bekanntmachung des Hinweises auf die Patenterteilung: **27.04.2016**
(21) Anmeldenummer: 10760285.6
(22) Anmeldetag: 13.09.2010
(51) Int. Cl.: B23D 47/06, B23D 59/00, B23D 45/10

(54) **TRENNEINRICHTUNG UND TRENNVERFAHREN**
CUTTING DEVICE AND CUTTING METHOD
DISPOSITIF DE SÉPARATION ET PROCÉDÉ DE SÉPARATION

(30) Priorität: 11.09.2009 DE 202009012299 U
(43) Veröffentlichungstag der Anmeldung: 18.07.2012
(73) Patentinhaber: Pfeifer Holz GmbH, 86556 Kühbach (DE)
(72) Erfinder: PFEIFER, Clemens, A-6460 Imst (AT)
(74) Vertreter: Ernicke, Klaus Stefan
(86) Internationale Anmeldenummer: PCT/EP2010/063348
(87) Internationale Veröffentlichungsnummer: WO 2011/029923

(56) Entgegenhaltungen:
- CH-A5- 634 766
- DE-A1- 3 310 075
- DE-A1- 10 101 823
- US-A- 4 330 019

## Beschreibung

Die Erfindung betrifft eine Trenneinrichtung und ein Trennverfahren für intermittierend in Strangrichtung vorgeschobene gepresste Stränge aus pflanzlichen Kleinteilen mit den Merkmalen im Oberbegriff der selbstständigen Ansprüche 1 und 13.

Eine solche Trenneinrichtung ist aus der DE 101 01 823 A1 bekannt. Sie ist als Säge mit einem Sägeschlitten und einem Festanschlag für den Strang ausgebildet. Über den Anschlagkontakt wird der Sägeschlitten am Ende des Stranghubs positioniert. Der Sägeschlitten wird dabei einerseits von einer gestellfesten Feder oder einem Zylinder gegen den ankommenden Strang gedrückt und andererseits vom Strang mitgenommen, wobei am Sägeschlitten ein zweiter Zylinder angeordnet ist, dessen Kolbenstange gegen das vordere Strangende ausfährt und den Kontakt des vorderen Strangendes am Festanschlag dämpft. Die vorbekannte Trenneinrichtung dient zum Ablängen und Unterteilen des Strangs in mehrere Klötze. In der Praxis hat sich gezeigt, dass die Sägeergebnisse, die Klotzabmessungen und die Klotzqualität nicht konstant sind.

Die US 4 330 019 A offenbart eine Trenneinrichtung für Baumstämme, die auf einem Eingangsförderer zugeführt und vermessen sowie anschließend seitlich auf eine Stützstruktur abgeworfen werden. Auf der Stützstruktur wird der ruhende Baumstamm zersägt, wobei sein Vorderende taktil mit einem Sensor erfasst und danach die einzeln verstellbaren Sägeeinheiten positioniert werden. Sie zerteilen den Stamm in mehrere Stücke, deren Länge je nach Stammabmessung variiert.

Es ist Aufgabe der vorliegenden Erfindung, eine bessere Trenntechnik aufzuzeigen.

Die Erfindung löst diese Aufgabe mit den Merkmalen in den selbstständigen Ansprüchen 1 und 13.

Die beanspruchte Trenntechnik sorgt für eine höhere Trenngenauigkeit und bessere Maßhaltigkeit der abgetrennten Strangabschnitte bzw. Klötze. Außerdem ist die Klotzqualität gleichbleibend hoch. Beim Trennvorgang steht der Strang vorzugsweise und kann mit hoher Präzision abgelängt werden.

Mit der Erfindung wurde erkannt, dass die Klotzmängel bei der vorbekannten Säge auf die Strangbelastung durch die gegen den Strangvorschub arbeitenden Zylinder und den Festanschlag hervorgerufen wurden. Der vorgeschobene Strang muss außerdem gegen diese rückstellenden Zylinderkräfte die Masse des Sägeschlittens mitnehmen und bewegen. Dies führte zu Stauchungen am vorderen Strangbereich, die sich nach dem Sägen wieder entspannen und zu einer Klotzveränderung führen.

Bei der beanspruchten Trenntechnik sind derartige Strangbelastungen und Stauchungen an Festanschlägen nicht mehr erforderlich. Durch den gesteuerten Antrieb und die Positioniereinrichtung wird das Trennmittel aktiv und eigenständig längs des in Strangrichtung (10) bewegten Strangs bewegt und gegenüber dem detektierten vorderen Strangende positioniert. Durch den eigenständigen Antrieb des Trennmittels braucht der Strang das Trennmittel nicht mehr mitzunehmen. Die Positionierung des Trennmittels erfolgt über eine Steuerung des Fahrantriebs in Abhängigkeit von der Lage des beim Vorschub in Strangrichtung (10) detektierten vorderen Strangendes. Hierbei wird eine Bezugslage zwischen Strangende und Trennmittelposition berechnet und eingestellt.

Das vordere Strangende kann kraftarm oder berührungslos, z.B. mit einem Messstrahl, detektiert werden. Hierbei kann seine Absolutlage oder seine Relativlage, insbesondere der Abstand zwischen dem vorderen Strangende und einem Bezugspunkt des Trennmittels detektiert werden. Letzteres kann über eine bevorzugt berührungslose Abstandsmessung erfolgen. Negative Auswirkungen auf den Strang und sein Frontende werden vermieden. Die Detektion kann aus veränderlichen Positionen, z.B. auch on the fly und insbesondere vom Trennmittel aus erfolgen.

Die beanspruchte Trenntechnik hat den Vorteil, dass sie schneller und genauer eingerichtet bzw. einjustiert werden kann. Auch eine Nachjustierung ist wegen der Relativmessung des Abstands auf einfache Weise möglich. Der Einrichtaufwand und der Ausschuss werden minimiert. Außerdem ist eine Umstellung der Trenneinrichtung auf andere Trenn- oder Klotzmaße einfach, schnell und präzise möglich.

Ein weiterer Vorteil liegt in der Erfassungsmöglichkeit kleiner Nachschwingbewegungen des Strangs an seinem Hubende. Dies erhöht die Trennpräzision. Günstig ist außerdem die schnelle Positionierbarkeit des Trennmittels. Hierdurch ist es möglich, am ruhenden Strang mehrere Schnitte mit zwischenzeitlicher Verschiebung des Trennmittels vorzunehmen. Der Strang wird dabei ebenfalls nicht belastet.

Die beanspruchte Trenntechnik hat ferner den Vorteil einer besseren Ausnutzung der Prozesszeiten und der verfügbaren Wege. Am stehenden Strang können in der vorerwähnten Weise mehrere, insbesondere zwei oder drei, Trennvorgänge nacheinander mit zwischenzeitlichen Verfahrbewegungen des Trennmittels längs des Strangs durchgeführt werden. Das Trennmittel kann dabei z.B. entgegen der Förderrichtung des Strangs bewegt werden. Wenn das Ende des verfügbaren Fahrbereichs des Trennmittels erreicht ist, kann das Trennmittel in eine Ausgangsposition zurückkehren, wobei während einem oder mehrerer nachfolgender Strangpresshübe ein Trennen des Strangs (3) unterbleibt.

In den abhängigen Ansprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Strangpresseinrichtung mit einer am Ende angeordneten Trenneinrichtung, insbesondere einer Klotzsäge,
- Figur 2:: eine schematische Seitenansicht der Trenneinrichtung von Figur 1 in einer Anfangsstellung,
- Figur 3:: eine Seitenansicht der Trenneinrichtung von Figur 1 und 2 in einer Klemm- und Trennstellung und
- Figur 4:: eine Seitenansicht der Trenneinrichtung von Figur 1 bis 3 in der Senk- und Abführstellung

Die Erfindung betrifft eine Trenneinrichtung (1) für intermittierend vorgeschobene Stränge (3). Sie betrifft ferner ein Trenn- und Positionierverfahren sowie eine mit einer Trenneinrichtung (1) ausgerüstete Strangpresseinrichtung (2).

Die Stränge (3) können von unterschiedlicher Art sein. Hierbei handelt es sich um gepresste Stränge aus pflanzlichen Kleinteilen. Diesen Kleinteilen kann bei Bedarf ein Bindemittel, z.B. ein auf Wärme ansprechender und aushärtender Klebstoff beigegeben sein. Die pflanzlichen Kleinteile können z.B. Holzkleinteile sein, die z.B. aus Holzspänen, Rindenteilen oder dgl. bestehen. Auch andere Pflanzenteile sind möglich. Der Strang (3) kann eine beliebige Querschnittsform, z.B. kreisrund oder prismatisch, insbesondere rechteckig mit ggf. angeschrägten Kanten haben. Er kann massiv ausgebildet sein oder ein oder mehrere Durchgangsöffnungen, insbesondere eine zentrale Bohrung, aufweisen.

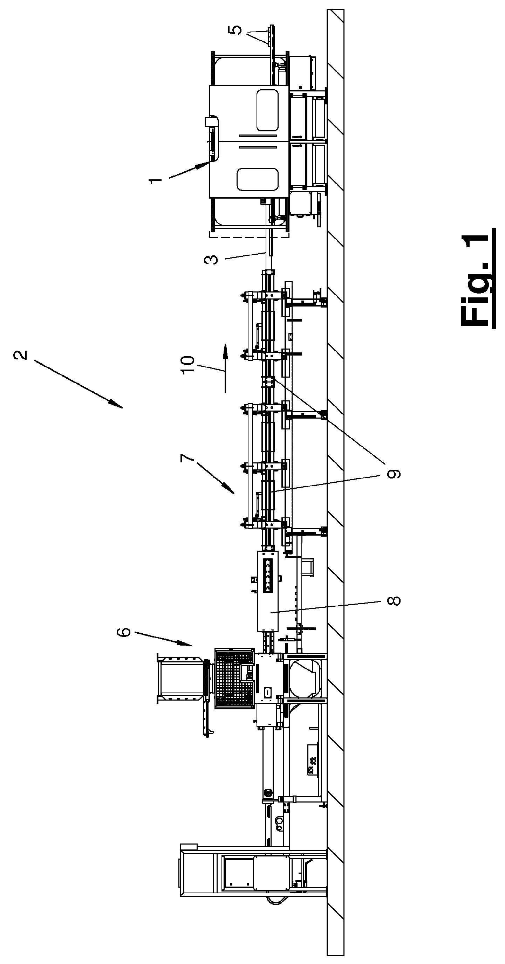

Figur 1 zeigt schematisch eine Strangpresseinrichtung (2) zur Herstellung eines solchen Pressstrangs (3). Die Strangpresseinrichtung (2) weist einen Strangerzeuger (6) auf, der z.B. als Strangpresse ausgebildet ist und mit einem hydraulisch oder mit Kurbel angetriebenen Kolben ein in den Füll- und Pressraum eingefülltes Kleinteilgemisch vorschiebt und verdichtet, wobei es durch einen Rezipienten und einen Formkanal an den bereits vorher gebildeten Strang (3) angepresst und angefügt wird. Die Strangpresse (6) schiebt durch die oszillierenden Kolbenbewegungen den Strang (3) schrittweise vor in Förderrichtung (10) und schiebt ihn durch eine anschließende Behandlungsstrecke (7).

In der Behandlungsstrecke (7) wird der Strang (3) in seiner Form fixiert und in seiner Konsistenz verfestigt. Hierfür kann die Behandlungsstrecke (7) z.B. eine Heizeinrichtung (8) aufweisen, mit der dem Strang (3) und dem darin ggf. enthaltenen Bindemittel Wärme in Form von Kontaktwärme von außen über beheizte Wände oder ggf. auch von innen über einen beheizten Dorn zugeführt wird. Alternativ oder zusätzlich ist eine Wärmezufuhr über Dampf oder auf andere Weise möglich. Diese Erhitzungsmöglichkeiten können auch kombiniert werden. Vorzugsweise weist die Heizeinrichtung (8) eine Bedampfungseinrichtung für Innen- und/oder Außenbedampfung auf. Diese kann sich in Förderrichtung (10) direkt an einen strangformgebenden und ggf. gekühlten Rezipienten der Strangpresse (6) anschließen. Die Bedampfung kann mit Dampfsteuerung erfolgen, um die Wärme größtenteils oder vollständig durch Phasenwechsel und Kondensation in den Strang (3) einzubringen.

An die Heizeinrichtung (8) kann sich die Aushärteeinrichtung (9) anschließen, in der ggf. zur Unterstützung der Aushärtung dem Strang (3) Wärme bis zum Prozessende zugeführt wird. Ggf. kann auch eine nachfolgende Abkühlung in einem Abkühlkanal stattfinden.

Die Behandlungsstrecke (7) kann gemäß der EP 1 925 413 A2 oder in anderer Weise ausgestaltet sein. Sie kann weitere Komponenten beinhalten, z.B. einen Entdampfungsreaktor für den Strang (3) oder dgl.

Am Ende der Behandlungsstrecke (7) schließt sich die Trenneinrichtung (1) an. Sie dient dazu, den geformten und verfestigten Strang (3) in mehrere Abschnitte zu trennen und abzulängen. Hierbei können mehrere Trennungen gleichzeitig vorgenommen werden. Die abgetrennten Abschnitte können z.B. sog. Strangpressklötze (5) sein, die als Palettenfüße oder zu anderen Zwecken eingesetzt werden. Der Trennvorgang findet bei Stillstand des Strangs (3) statt.

Das Ablängen und Trennen des Strangs (3) kann in beliebig geeigneter Weise erfolgen. Die Trenneinrichtung (1) hat hierfür ein Trennmittel (13) mit ein oder mehreren Trennwerkzeugen (17,18), die von einem Antrieb (20) betätigt werden und mittels einer Zustelleinrichtung (21) an den Strang (3) zugestellt und wieder entfernt werden. Im gezeigten Ausführungsbeispiel ist das Trennmittel (13) als Säge ausgebildet, wobei die Trennwerkzeuge (17,18) rotierend von einem Antrieb (20), z.B. einem Elektromotor, bewegte kreisrunde Sägeblätter sind. Wenn mehrere Trennschnitte in einem Vorgang gesetzt werden sollen, ist eine entsprechende Zahl von Sägeblättern (17,18) vorhanden, die auf einer gemeinsamen Aufnahme (19), z.B. einem Dorn, in Axialrichtung hintereinander mit Distanzhülsen aufgezogen sind. Die Distanzhülsen bestimmen den Sägeblattabstand und damit das Klotzmaß in Längs- und Strangrichtung (10). Im gezeigten Ausführungsbeispiel ist das Trennmittel (13) als Hubsäge ausgebildet und kann mit einer hydraulischen Zustelleinrichtung (21) in einer Hebe- und Senkbewegung oder alternativ in einer Schwenkbewegung zum Strang (3) zugestellt werden.

Das gegen die Förderrichtung (10) gesehen erste Trennwerkzeug bzw. Sägeblatt (17) wird mit einem der Klotzlänge entsprechenden Abstand gegenüber dem vorderen Ende (4) des Strangs (3) positioniert. Die Abstände der Folgeblätter (18) ergeben sich durch die Distanzhülsen. In der gezeigten Ausführungsform sind vier Sägeblätter (17,18) auf einem Dorn gehalten. Ihre Zahl kann jedoch kleiner oder größer sein. Bei einem Wechsel des Klotzformats wird der Dorn (19) mit dem Sägeblattsatz komplett ausgetauscht. Alternativ ist ein Einzelaustausch der Sägeblätter (17,18) und der Distanzhülsen möglich.

Das Trennmittel (13) ist längs des Strangs (3) beweglich. Hierfür weist die Trenneinrichtung (1) ein stationäres und z.B. flurgebundenes Gestell (11) mit einem darauf längs des Strangs (3) beweglich gelagerten Träger (12) auf, der z.B. als Schlitten mit einer entsprechenden Schlittenführung ausgebildet ist. Der Träger (12) wird von einem steuerbaren Fahrantrieb (25) beaufschlagt und bewegt. Der Fahrantrieb (25) kann dafür auf dem Träger (12) oder am Gestell (11) angeordnet sein. Er kann in beliebig geeigneter Weise ausgebildet sein, z.B. als Gewindespindeltrieb mit einem steuerbaren Elektromotor, als positionssteuerbarer Zylinder, als umlaufender Bandantrieb mit einem Zahnriemen oder dgl. oder in beliebiger anderer Weise.

Der Fahrbereich des Trägers (12) ist größer und vorzugsweise wesentlich größer als die Hublänge des Strangs (3) bei jedem Strangpresshub des Kolbens in der Strangpresse (6). Der Fahrbereich kann ein Mehrfaches der Hublänge, z.B. das Zwei- bis Fünffache betragen.

Die Trenneinrichtung (1) besitzt ferner eine Detektionseinrichtung (14) zur Erfassung des vorderen Strangendes (4) und eine Positioniereinrichtung (15). Diese wirkt mit dem Fahrantrieb (25) zusammen und positioniert das Trennmittel (13) mit einem vorgegebenen Bezug zum Strangende (4). Hierbei wird das erste Trennwerkzeug oder Sägeblatt (17) in einem der vorgebenen Klotzlänge entsprechenden Abstand vom vorderen Strangende (4) positioniert.

Die Trenneinrichtung (1) ist an den Vorschubtakt des Strangs (3) angepasst und führt den Trennvorgang in den Standpausen des Strangs (3) aus. Dabei kann eine Signal- oder Steuerverbindung zum Strangerzeuger (6) oder zur Behandlungsstrecke (7) bzw. zu deren Steuerung bestehen. Der Stillstand des Strangs (3) kann auch durch die Detektionseinrichtung (14) festgestellt werden.

Die Detektionseinrichtung (14) kann unterschiedlich ausgebildet und angeordnet sein. Sie kann das vordere Strangende (4) auch auf unterschiedliche Weise detektieren. Vorzugsweise ist die Detektionseinrichtung (14) dem Trennmittel (13) zugeordnet bzw. auf dem Träger (12) angeordnet und kann mit diesem zusammen längs des Strangs (3) bewegt werden. Sie kann alternativ stationär an der Trenneinrichtung (1) oder an anderer Stelle angeordnet sein.

Die Detektionseinrichtung (14) ist in Förder- oder Strangrichtung (10) mit Abstand vor dem vorderen Strangende (4) angeordnet und ist vorzugsweise am Trennmittel (13) an einem vorgegebenen Bezugspunkt mit fester Lage installiert. Die Detektionseinrichtung (14) weist hierfür einen Abstandsmesser (22) auf, der mittels eines Halters (24) am Träger (12) angeordnet ist.

Der Abstandsmesser (22) ermittelt den Abstand in Axialrichtung zum vorderen Strangende (4). Er kann hierfür in der bevorzugten Ausführungsform als berührungsloser Sensor ausgebildet sein.

Die Abstandsmessung kann auf unterschiedliche Weise erfolgen. Beispielsweise emittiert der Abstandsmesser (22) einen auf das Strangende (4) und dessen Stirnfläche gerichteten Messstrahl (23). Dies kann z.B. ein Lichtstrahl sein. Alternativ kommt ein gerichteter Ultraschallstrahl oder dgl. in Betracht. Ggf. können mehrere Messstrahlen (23) vorhanden sein, wobei die hierüber ermittelten Abstände untereinander verglichen und auf Plausibilität kontrolliert werden. Der Messstrahl (23) kann im wesentlichen längs der Strangrichtung (10) ausgerichtet sein. Er kann mit dieser Richtung (10) fluchten oder auch leicht schräg dazu angeordnet sein. Vorzugsweise zielt der Messstrahl (23) auf das obere Ende des Strangs. Durch ein Absenken der Klötze (5) nach erfolgtem Trennschnitt kann der Messstrahl (23) sofort das nächste vordere Strangende (4) detektieren. Der Abstandsmesser (22) ist hierzu am oberen Ende eines bügelförmigen oder portalförmigen Halters (24) angeordnet.

Alternativ kann der Abstandsmesser (22) einen axial ausfahrbaren Fühler aufweisen, der in Berührungskontakt mit dem vorderen Strangende (4) treten kann und dabei nur eine sehr geringe Anpresskraft durch eine Feder, einen Vorschubantrieb oder dgl. entwickelt. Der Abstand wird durch die Ausfahrlänge bzw. Relativbewegung des Fühlers gegenüber einem Messhalter bestimmt.

In einer weiteren Abwandlung kann das vordere Strangende (4) auf andere Weise detektiert werden, wobei seine Bewegung bzw. Position gegenüber einem externen Messmittel erfasst wird, das z.B. des Randkante am vorderen Strangende (4) mit einer seitlichen Blickrichtung detektiert. Ferner kann ein massearmer Messfühler an das vordere Strangende (4) mit geringer Kraft angelegt und beim Strangvorschub mitgeschleppt werden.

Die Positioniereinrichtung (15) ist mit der Detektionseinrichtung (14) verbunden und erhält von dieser Detektionssignale für das vordere Strangende (4). Im gezeigten Ausführungsbeispiel sind dies die Signale der relativen Abstandsmessung zwischen der Frontfläche des vorderen Strangendes (4) und dem Sensor (22). Die Positioniereinrichtung (15) weist eine Steuerung (27) auf, die eigenständig ausgebildet oder in eine Maschinensteuerung (37) integriert sein kann. Die Steuerung (27) kann auch ein Softwaremodul sein.

Die Positioniereinrichtung (15) weist ferner eine Erfassungseinrichtung (26) für die Position und/oder den Weg des Trennmittels (13) in Strangrichtung (10) auf. Die Erfassungseinrichtung (26) kann z.B. ein Weggeber sein, der auch eine Relativposition oder eine Absolutposition erfassen kann. Die Erfassungseinrichtung (26) kann mit dem Träger (12) zusammenwirken und ist mit der Steuerung (27) verbunden. Die Steuerung (27) ist außerdem mit dem Antrieb (25), insbesondere einem Fahrantrieb, zur Bewegung des Trennmittels (13) bzw. Trägers (12) längs des Strangs (3) verbunden.

Aus den von der Detektions- und Erfassungseinrichtung (4,26) übermittelten Messwerten kann die Steuerung (27) den aktuellen Abstand des Trennmittels (13) vom vorderen Strangende (4) und insbesondere die Lage des ersten Trennwerkzeugs (17) mit Bezug zum vorderen Strangende (4) in Strangrichtung (10) ermitteln. Durch Ansteuerung des Fahrantriebs (25) wird das Trennmittel (13) derart relativ zum bewegten Strang (3) verfahren, dass am Ende des Strangpresshubs und bei Stillstand des Strangs (3) das erste Trennwerkzeug (17) im vorgegebenen Abstand exakt gegenüber dem vorderen Strang (4) positioniert ist.

Die Trenneinrichtung (1) weist ferner eine Fixiereinrichtung (16) auf, die z.B. als Klemm- oder Spanneinrichtung ausgebildet sein kann und mit der der Strang (3) für den Trennprozess festgehalten werden kann. Die Fixiereinrichtung (16) ist mit dem Trennmittel (13) gemeinsam am Träger (12) angeordnet und wird mitbewegt. Die Fixiereinrichtung (16) kann ein oder mehrere, z.B. zwei Fixierelemente (28,29) aufweisen, die mittels eigenständiger Antriebe (30), z.B. Zylinder, an den Strang (3) außenseitig zugestellt und wieder entfernt werden können. Zur Abstützung der Spann- oder Klemmkraft kann mindestens ein Gegenhalter (31) vorhanden sein.

Die Fixiereinrichtung (16) weist im Bereich des Trennmittels (13) und der Trennwerkzeuge (17,18) ein Fixierelement (28) auf, das z.B. als vertikal heb- und senkbare axial ausgerichtete Sägewanne ausgebildet ist, die einerseits den Strang (3) und die beim Trennen entstehenden Klötze (5) an der Unterseite zumindest bereichsweise umfasst sowie unterstützt und andererseits ein Eindringen der Trennwerkzeuge (17,18) erlaubt. Der Gegenhalter (31) ist ein am Träger (12) abgestützter Bügel, der ebenfalls vom Trennmittel (13) durchdrungen werden kann und mehrere Schlitze aufweist. Der Gegenhalter (31) bildet eine Art Portal oder Tunnel und übergreift den Strang (3) zwischen den Trennstellen.

Die Fixiereinrichtung (16) weist ferner in Strangrichtung (10) gesehen im Bereich vor den Trennwerkzeugen (17,18) ein weiteres Fixierelement (29) auf, welches z.B. als Hubstempel ausgebildet ist. Der Gegenhalter (31) kann sich bis in den Bereich dieses Fixierelements (29) erstrecken. Das Fixierelement (29) hält den Strang (3) kurz hinter dem vorderen Strangende (4) fest. Die Fixiereinrichtung (16) kann ferner noch eine Strangführung (32) aufweisen. Dies können ein oder mehrere vor dem Trennmittel (13) angeordnete Niederhalter sein. Im Bereich des Trennmittels (13) und in dem vom Gegenhalter (31) gebildeten Kanal können seitliche, drehbare Walzen oder andere Führungsmittel für die Seitenführung des Strangs (3) vorhanden sein.

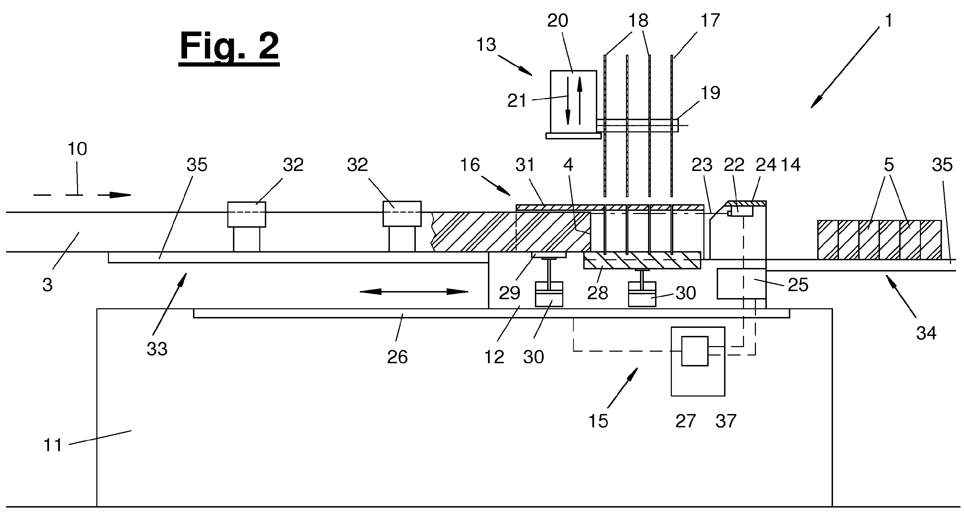

Wie Figur 2 bis 4 verdeutlichen, sind auf dem Träger (12) die Fixiereinrichtung (16), das Trennmittel (13) und die Detektionseinrichtung (14) angeordnet.

Der von links in Richtung (10) intermittierend zugeführte Strang (3) gelangt über eine Zuführstrecke (33) zum Trennmittel (13) und wird auf diesem Weg ggf. von einem Führungsmittel (35), z.B. einem Stützbalken oder einer Stützwanne unterstützt. Nach dem Trennvorgang verlassen die Klötze (5) die Trenneinrichtung (1) über eine Abführstrecke (34), die ebenfalls ein geeignetes Führungsmittel (35) aufweist und im weiteren Verlauf ggf. an einen Förderer zum Weitertransport der Klötze (5), an eine Waage oder dgl. anschließen kann.

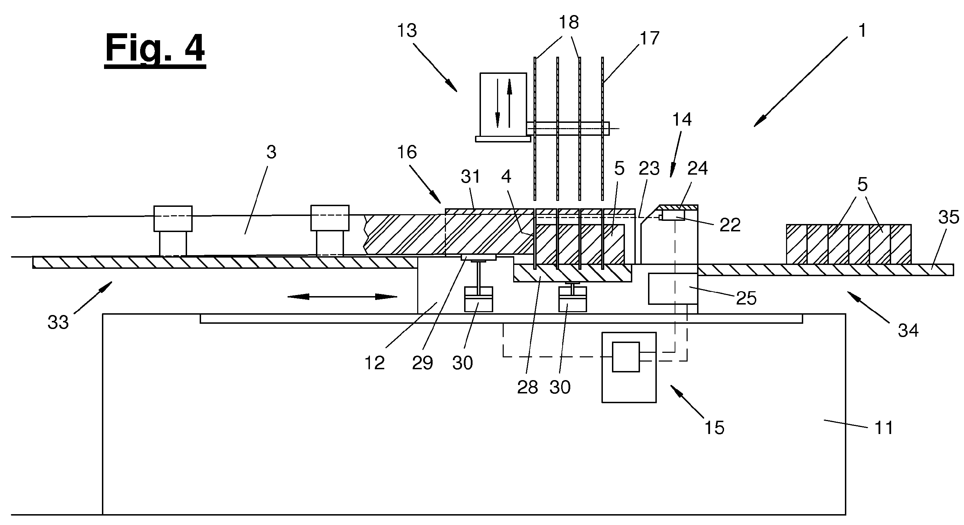

Wie Figur 2 bis 4 verdeutlichen, hat die Trenneinrichtung (1) unterschiedliche Höhenniveaus für den Strang (3) und die abgetrennten Klötze (5). Die Zuführstrecke (33) des Strangs (3) bzw. das Zuführniveau liegt höher als die Abführstrecke (44) der Klötze (5). Wie Figur 4 verdeutlicht, kann die Detektionseinrichtung (14) über die abgesenkten Klötze (5) hinweg das neue vordere Strangende (4) erfassen.

Figur 2 verdeutlicht eine Anfangsposition beim Strangvorschub, wobei sich der Träger (12) mit dem Trennmittel (13) in Gegenrichtung zum Strangvorschub (10) bewegen und dabei den anfänglich großen Abstand zum vorderen Strangende (4) verringern kann. Durch laufenden Vergleich der gemessenen Abstände und der Trägerposition kann auch die Fahrgeschwindigkeit verändert und bedarfsweise angepasst werden, wobei ggf. anfänglich eine schnellere Annäherungsbewegung und gegen Erreichen eines vorgegebenen Abstandsmaßes zu einer Schleichfahrt umgeschaltet wird.

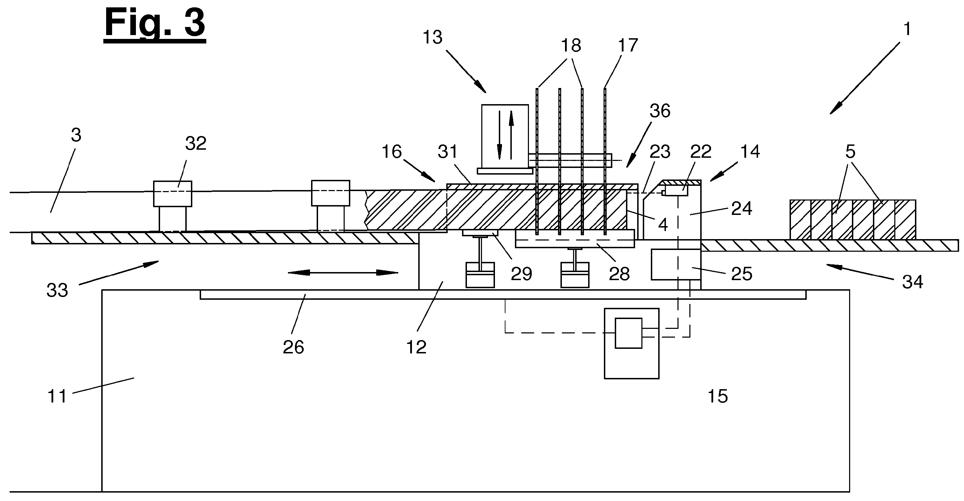

Für die in Figur 3 gezeigte Trenn- oder Fixierstellung (36) besteht ein vorgegebener Abstand zwischen dem vorderen Strangende (4) und dem Bezugspunkt des Abstandsmessers (22). Dieses Vorgabemaß korreliert mit dem gewünschten Abstand des ersten Sägeblatts (17) vom vorderen Strangende (4). Das Abstandsmaß kann bei der Einrichtung und Justierung der Trenneinrichtung (1) zumindest grob vorgegeben sein und wird vom Maschinenführer ggf. fein eingestellt bzw. nachjustiert, wobei die Verstellung anhand einer Vermessung des ersten Klotzes in der Klotzreihe vorgenommen wird. Insbesondere kann eine evtl. Maßabweichung der Klotzlänge unmittelbar als Korrekturwert zur Veränderung des vorgegebenen Abstands herangezogen und in die Steuerung (27) mittels eines geeigneten Bedientableaus (nicht dargestellt) oder dgl. eingegeben werden. Ferner können während des Press- und Trennbetriebs Kontrollmessungen der Klotzmaße und evtl. Nachjustierungen vorgenommen werden.

In der in Figur 3 gezeigten Fixierstellung (36) ist der vordere Strangbereich von beiden angehobenen Fixiermitteln (28,29) eingespannt, wobei die Trennwerkzeuge (17,18) zugestellt werden und vier Klötze (5) abtrennen.

Figur 4 zeigt den Folgeschritt, wobei das eine Fixiermittel (28) bis auf das Höhenniveau der Abführstrecke (34) mit den Klötzen (5) abgesenkt ist. Der restliche Strang (3) wird vom anderen Fixiermittel (29) in der oberen Position festgehalten. Hierbei kann der Abstandsmesser (22) über die Klötze hinweg das neue vordere Strangende (4) detektieren.

Im Folgeschritt kann das Fixiermittel (29) auf das Höhenniveau der Zuführstrecke (33) mit dem Strang (3) abgesenkt werden. Im nachfolgenden Strangpresshub kann der Strang (3) die abgetrennten Klötze (5) bei stehendem Träger (12) auf die Abführstrecke (34) und das Führungsmittel (35) abschieben, wobei sie unter dem Abstandsmesser (22) hindurchwandern. Alternativ kann der Träger (12) bei noch stehendem Strang (3) nach dem ersten Trennschnitt und Entlastung beider Fixierelemente (28,29) gegen die Förderrichtung (10) fahren und sich gegenüber den abgetrennten Klötzen (5) bewegen. Dabei kann über die Abstandsmessung der Träger (12) mit dem Trennmittel (13) für einen nächsten Trennschnitt positioniert werden. Während der Standphasen des Strangs (3) im Strangpressprozess können ggf. zwei oder drei Trennschnitte gesetzt werden. Hierbei kann der verfügbare Fahrweg gegen die Förderrichtung (10) ausgenutzt werden.

Die Steuerung (27) kann kalkulieren, ob der restliche Fahrweg für einen Trennvorgang ausreicht. Wenn nicht, kann das Trennmittel (13) mit dem Träger (12) in Förderrichtung (10) zurück in eine Ausgangs- oder Parkposition am rechten Fahrwegende oder in eine Zwischenposition bewegt werden. Dabei ist es möglich, dass während eines oder mehrerer Strangpresshübe kein Trennen und Ablängen erfolgt.

Die Steuerung (27) kann insbesondere die Position des vorderen Strangendes (4) beim Trennvorgang feststellen und dessen Folgeposition nach dem nächsten und jedem weiteren Strangpresshub vorausberechnen. Das Trennmittel (13) kann dadurch gleich in eine der Folgeposition entsprechende Wartestellung bewegt werden, aus der heraus die Ermittlung und Einnahme der genauen Trennposition (36) in Förderrichtung (10) schnell und auf kurzem Wege möglich ist. Ein Optimierungsprogramm in der Steuerung (27) kann vorausschauend die Wahl der günstigsten Trennmittelpositionen treffen und für eine bestmögliche Abstimmung von Strangpresshub bzw. vorschub, Länge der abzutrennenden Klotzreihe und Trennmittelbewegung bei der jeweiligen Trennwerkzeug-Konfiguration sorgen. Dies wirkt sich insbesondere positiv aus, wenn die Längen des Strangpresshubs und der Klotzreihe unterschiedlich sind. Eine Optimierung kann Zeit und Wege sowie Energie sparen und erlaubt eine maximale Ausnutzung der Pressenkapazität und -leistung.

Abwandlungen der gezeigten und beschriebenen Ausführungsform sind in verschiedener Weise möglich. Das Trennmittel (13) kann in anderer Weise ausgebildet sein und z.B. umlaufende Sägebänder als Trennwerkzeuge (17,18) aufweisen. Mit dem Trennmittel (13) können ggf. mehrere nebeneinander liegende Stränge (3) in einem Schritt durchtrennt werden. Ferner kann die konstruktive Gestaltung der Detektionseinrichtung (14), der Positioniereinrichtung (15) und der Fixiereinrichtung (16) variieren. Im Bereich der Zuführstrecke (33) kann der Strang (3) schwebend gehalten werden, wobei auf ein Führungsmittel (35) verzichtet wird. Die erfindungsgemäße Trenntechnik lässt sich mit Vorteil auch bei einem kontinuierlichen Strangpressvorschub einsetzen. Außerdem können ein oder mehrere Stränge von der Trenneinrichtung erst in längere Teilstücke oder Stangen abgelängt werden, die zusammengeführt werden und aus denen in einer Folgestation die relativ kurzen Klötze (5) abgetrennt werden. Die Detektionseinrichtung (4) kann auch für andere Trenntechniken, insbesondere für ein mitfahrendes und den Strang (3) in der Vorschubbewegung schneidendes Trennmittel (13) eingesetzt werden. Die Detektionseinrichtung (4) kann ferner mit mehreren parallelen und z.B. aus bekannter stationärer Position quer auf den Strang gerichteten Messstrahlen, beispielsweise Reflexlichttastern, die Stranglage und das Frontende des Strangs detektieren.

### BEZUGSZEICHENLISTE

- 1: Trenneinrichtung, Säge
- 2: Strangpresseinrichtung
- 3: Strang, Pressstrang
- 4: Frontende Strang
- 5: Klotz
- 6: Strangerzeuger, Strangpresse
- 7: Behandlungsstrecke
- 8: Heizeinrichtung
- 9: Aushärteeinrichtung
- 10: Zuführrichtung, Strangrichtung
- 11: Gestell
- 12: Träger, Schlitten
- 13: Trennmittel
- 14: Detektionseinrichtung
- 15: Positioniereinrichtung
- 16: Fixiereinrichtung, Klemmeinrichtung
- 17: Trennwerkzeug, Sägeblatt, erstes Blatt
- 18: Trennwerkzeug, Sägeblatt, Folgeblatt
- 19: Aufnahme,Dorn
- 20: Antrieb, Sägeantrieb
- 21: Zustelleinrichtung
- 22: Abstandsmesser
- 23: Messstrahl
- 24: Halter, Bügel
- 25: Antrieb, Fahrantrieb
- 26: Erfassungseinrichtung, Weggeber
- 27: Steuerung
- 28: Fixierelement, Sägewanne
- 29: Fixierelement, Hubstempel
- 30: Antrieb, Fixierantrieb
- 31: Gegenhalter, Bügel
- 32: Strangführung, Niederhalter
- 33: Zuführstrecke, Zuführniveau
- 34: Abführstrecke, Abführniveau
- 35: Führungsmittel, Stützbalken
- 36: Fixierstellung, Klemmstellung, Trennstellung
- 37: Maschinensteuerung

## Patentansprüche

1. Trenneinrichtung für intermittierend in Strangrichtung (10) vorgeschobene gepresste Stränge (3) aus pflanzlichen Kleinteilen, wobei die Trenneinrichtung (1) ein längs des Strangs (3) bewegliches Trennmittel (13) aufweist, **dadurch gekennzeichnet, dass** die Trenneinrichtung (1) einen steuerbaren Fahrantrieb (25) für das längs des bewegten Strangs (3) verfahrbare Trennmittel (13) und eine Detektionseinrichtung (14) zur Erfassung des vorderen Strangendes (4) bei dessen Vorschub in Strangrichtung (10) sowie eine mit dem Fahrantrieb (25) zusammenwirkende Positioniereinrichtung (15) zur Positionierung des Trennmittels (13) mit Bezug zum Strangende (4) aufweist.

2. Trenneinrichtung nach Anspruch 1, **dadurch gekennzeichnet, dass** die Detektionseinrichtung (14) dem Trennmittel (13) zugeordnet und mit diesem zusammen längs des Strangs (3) beweglich ist.

3. Trenneinrichtung nach Anspruch 1 oder 2, **dadurch gekennzeichnet, dass** die Detektionseinrichtung (14) einen Abstandmesser (22) aufweist.

4. Trenneinrichtung nach Anspruch 3, **dadurch gekennzeichnet, dass** der Abstandsmesser (22) als berührungsloser Sensor ausgebildet ist oder einen axial ausfahrbaren Fühler aufweist.

5. Trenneinrichtung nach Anspruch 3 oder 4, **dadurch gekennzeichnet, dass** der Abstandsmesser (22) mit Abstand vor dem vorderen Strangende (4) angeordnet ist.

6. Trenneinrichtung nach einem der vorhergehenden Ansprüche, **dadurch gekennzeichnet, dass** die Positioniereinrichtung (15) mit der Detektionseinrichtung (14) verbunden ist und eine Erfassungseinrichtung (26) für die Position und/oder den Weg des Trennmittels (13) in Strangrichtung (10) aufweist.

7. Trenneinrichtung nach einem der vorhergehenden Ansprüche, **dadurch gekennzeichnet, dass** die Trenneinrichtung (1) ein Gestell (11) mit einem darauf längs des Strangs (3) beweglich gelagerten Träger (12) aufweist, auf dem das Trennmittel (13) angeordnet ist, wobei der Fahrbereich des Trägers (12) größer als die Hublänge des Strangs (3) ist.

8. Trenneinrichtung nach einem der vorhergehenden Ansprüche, **dadurch gekennzeichnet, dass** die Trenneinrichtung (1) eine steuerbare Fixiereinrichtung (16) für den Strang (3) aufweist, wobei die Fixiereinrichtung (16) und die Detektionseinrichtung (14) auf dem Träger (12) angeordnet sind, wobei der Träger (12) einen steuerbaren Antrieb (20) aufweist und mit der Positioniereinrichtung (15) verbunden ist.

9. Trenneinrichtung nach einem der vorhergehenden Ansprüche, **dadurch gekennzeichnet, dass** die Trenneinrichtung (1) eine steuerbare Fixiereinrichtung (16) für den Strang (3) aufweist, wobei die Fixiereinrichtung (16) im Bereich des Trennmittels (13) ein an den Strang (3) zustellbares Fixierelement (28) und einen Gegenhalter (31) aufweist, wobei das Fixierelement (28) als heb- und senkbare Sägewanne und der Gegenhalter (31) als vom Trennmittel (13) durchdringbarer Bügel ausgebildet ist.

10. Trenneinrichtung nach einem der vorhergehenden Ansprüche, **dadurch gekennzeichnet, dass** die Trenneinrichtung (1) unterschiedliche Höhenniveaus für den Strang (3) und die abgetrennten Klötze (5) aufweist.

11. Trenneinrichtung nach einem der vorhergehenden Ansprüche, **dadurch gekennzeichnet, dass** das Trennmittel (13) als Säge mit mehreren rotierend angetriebenen Sägeblättern ausgebildet ist, die auf einer gemeinsamen Aufnahme (19) in Axialrichtung hintereinander mit Distanzhülsen aufgezogen sind.

12. Strangpresseinrichtung für mit Bindemittel versehene pflanzliche Kleinteile, insbesondere Holzkleinteile, wobei die Strangpresseinrichtung (2) einen Strangerzeuger (6), eine Behandlungsstrecke (7) und eine Trenneinrichtung (1) aufweist, **dadurch gekennzeichnet, dass** die Trenneinrichtung (1) nach einem der Ansprüche 1 bis 11 ausgebildet ist und die Trenneinrichtung (1) mit dem Strangerzeuger (6) signal- oder steuertechnisch verbunden ist.

13. Verfahren zum Trennen von intermittierend in Strangrichtung (10) vorgeschobenen gepressten Strängen (3) aus pflanzlichen Kleinteilen, wobei das Trennen mit einem längs des Strangs (3) beweglichen Trennmittel (13) durchgeführt wird, **dadurch gekennzeichnet, dass** das vordere Strangende (4) bei dessen Vorschub in Strangrichtung (10) detektiert wird, wobei das Trennmittel (13) mit einem Fahrantrieb (25) längs des bewegten Strangs (3) gesteuert verfahren und mit Bezug zum detektierten Strangende (4) positioniert wird.

14. Verfahren nach Anspruch 13, **dadurch gekennzeichnet, dass** am stehenden Strang mehrere, insbesondere zwei oder drei, Trennvorgänge nacheinander mit zwischenzeitlichen Verfahrbewegungen des Trennmittels (13) längs des Strangs (3) durchgeführt werden, wobei das Trennmittel (13) entgegen der Förderrichtung (10) des Strangs (3) bewegt wird.

15. Verfahren nach Anspruch 13 oder 14, **dadurch gekennzeichnet, dass** während einem oder mehrerer Strangpresshüben kein Trennen des Strangs (3) erfolgt.

## Claims

1. Separating device for pressed strands (3) of vegetal particles that are advanced intermittently in the strand direction (10), wherein the separating device (1) has a separating means (13) that is movable along the strand (3), **characterized in that** the separating device (1) has a controllable propulsion drive (25) for the separating means (13) that is displaceable along the moved strand, and a detection device (14) for sensing the front strand end (4) during the advancing thereof in the strand direction (10), and also a positioning device (15) which interacts with the propulsion drive (25) in order to position the separating means (13) with respect to the strand end (4).

2. Separating device according to Claim 1, **characterized in that** the detection device (14) is assigned to the separating means (13) and is movable together therewith along the strand (3).

3. Separating device according to Claim 1 or 2, **characterized in that** the detection device (14) has a distance meter (22).

4. Separating device according to Claim 3, **characterized in that** the distance meter (22) is configured as a contactless sensor or has an axially extendable probe.

5. Separating device according to Claim 3 or 4, **characterized in that** the distance meter (22) is arranged at a distance in front of the front strand end (4).

6. Separating device according to one of the preceding claims, **characterized in that** the positioning device (15) is connected to the detection device (14) and has a sensing device (26) for the position and/or the travel of the separating means (13) in the strand direction (10).

7. Separating device according to one of the preceding claims, **characterized in that** the separating device (1) has a frame (11) with a carrier (12) on which the separating means (13) is arranged, said carrier being mounted on said frame so as to be movable along the strand (3), wherein the travel range of the carrier (12) is greater than the stroke length of the strand (3).

8. Separating device according to one of the preceding claims, **characterized in that** the separating device (1) has a controllable fixing device (16) for the strand (3), wherein the fixing device (16) and the detection device (14) are arranged on the carrier (12), wherein the carrier (12) has a controllable driver (20) and is connected to the positioning device (15).

9. Separating device according to one of the preceding claims, **characterized in that** the separating device (1) has a controllable fixing device (16) for the strand (3), wherein the fixing device (16) has, in the region of the separating means (13), a fixing element (28) that is advanceable to the strand (3) and a counterholder (31), wherein the fixing element (28) is configured as a raisable and lowerable saw trough and the counterholder (31) is configured as a bracket through which the separating means (13) is able to pass.

10. Separating device according to one of the preceding claims, **characterized in that** the separating device (1) has different height levels for the strand (3) and the severed blocks (5).

11. Separating device according to one of the preceding claims, **characterized in that** the separating means (13) is configured as a saw having a plurality of saw blades that are driven in rotation, said saw blades being mounted on a common mount (19) in succession in the axial direction with spacer sleeves.

12. Extrusion device for vegetal particles provided with binder, in particular wood particles, wherein the extrusion device (2) has a strand former (6), a treatment section (7) and a separating device (1), **characterized in that** the separating device (1) is configured according to one of Claims 1 to 11 and the separating device (1) is connected to the strand former (6) in signalling or control terms.

13. Method for separating pressed strands (3) of vegetal particles that are advanced intermittently in the strand direction (10), wherein the separation is carried out by way of a separating means (13) that is movable along the strand (3), **characterized in that** the front strand end (4) is detected as it is advanced in the strand direction (10), wherein the separating means (13) is displaced along the moved strand (3) in a controlled manner by a propulsion drive (25) and is positioned with respect to the detected strand end (4).

14. Method according to Claim 13, **characterized in that** several, in particular two or three, separating operations are carried out one after another on the stationary strand with the separating means (13) being displaced along the strand (3) intermediately, wherein the separating means (13) is moved counter to the conveying direction (10) of the strand (3).

15. Method according to Claim 13 or 14, **characterized in that** no separation of the strand (3) takes place during one or more extrusion strokes.

## Revendications

1. Dispositif de séparation pour files (3) compressées poussées en avant de façon intermittente dans la direction de file (10) et réalisées à partir de petites pièces végétales, le dispositif de séparation (1) comportant un moyen de séparation (13) pouvant être déplacé dans le sens de la longueur de la file (3), **caractérisé en ce que** le dispositif de séparation (1) comporte un entraînement de roulement (25) commandable pour le moyen de séparation (13) pouvant être déplacé dans le sens de la longueur de la file (3) déplacée et un dispositif de détection (14) pour détecter l'extrémité de file (4) avant dans son avancement dans la direction de file (10) ainsi qu'un dispositif de positionnement (15) interagissant avec l'entraînement de roulement (25) pour positionner le moyen de séparation (13) par rapport à l'extrémité de file (4).

2. Dispositif de séparation selon la revendication 1, **caractérisé en ce que** le dispositif de détection (14) est associé au moyen de séparation (13) mobile, conjointement avec lui, dans le sens de la longueur de la file (3).

3. Dispositif de séparation selon la revendication 1 ou 2, **caractérisé en ce que** le dispositif de détection (14) comporte un élément de mesure d'écartement (22).

4. Dispositif de séparation selon la revendication 3, **caractérisé en ce que** l'élément de mesure d'écartement (22) est réalisé sous la forme d'un capteur sans contact ou comporte un détecteur pouvant sortir dans le plan axial.

5. Dispositif de séparation selon la revendication 3 ou 4, **caractérisé en ce que** l'élément de mesure d'écartement (22) est disposé à une certaine distance devant l'extrémité de file (4) avant.

6. Dispositif de séparation selon l'une quelconque des revendications précédentes, **caractérisé en ce que** le dispositif de positionnement (15) est relié au dispositif de détection (14) et comporte un dispositif de détection (26) pour la position et/ou la course du moyen de séparation (13) dans la direction de file (10).

7. Dispositif de séparation selon l'une quelconque des revendications précédentes, **caractérisé en ce que** le dispositif de séparation (1) comporte un châssis (11) avec un support (12) disposé dessus de façon mobile dans le sens de la longueur de la file (3) sur lequel le moyen de séparation (13) est disposé, la zone d'avancée du support (12) étant plus grande que la longueur de course de la file (3).

8. Dispositif de séparation selon l'une quelconque des revendications précédentes, **caractérisé en ce que** le dispositif de séparation (1) comporte un dispositif de fixation (16) commandable pour la file (3), le dispositif de fixation (16) et le dispositif de détection (14) étant disposés sur le support (12), le support (12) comportant un entraînement (20) commandable et étant relié au dispositif de positionnement (15).

9. Dispositif de séparation selon l'une quelconque des revendications précédentes, **caractérisé en ce que** le dispositif de séparation (1) comporte un dispositif de fixation (16) commandable pour la file (3), le dispositif de fixation (16) comportant dans la région du moyen de séparation (13) un élément de fixation (28) pouvant être placé au niveau de la file (3) et un contre-support (31), l'élément de fixation (28) étant réalisé sous la forme d'un bac de scie pouvant être monté et abaissé et le contre-support (31) étant réalisé sous la forme d'un étrier pouvant être traversé par le moyen de séparation (13).

10. Dispositif de séparation selon l'une quelconque des revendications précédentes, **caractérisé en ce que** le dispositif de séparation (1) comporte différents niveaux de hauteur pour la file (3) et les cales (5) séparées.

11. Dispositif de séparation selon l'une quelconque des revendications précédentes, **caractérisé en ce que** le moyen de séparation (13) est réalisé sous la forme d'une scie avec plusieurs lames de scie entraînées en rotation montées les unes derrière les autres sur un logement (19) commun dans la direction axiale, avec des douilles d'écartement.

12. Dispositif d'extrusion pour petites pièces végétales pourvues de moyens de jonction, notamment pour petites pièces de bois, le dispositif d'extrusion (2) comportant un élément de mise en file (6), un tronçon de traitement (7) et un dispositif de séparation (1), **caractérisé en ce que** le dispositif de séparation (1) est réalisé selon l'une quelconque des revendications 1 à 11 et que le dispositif de séparation (1) est relié à l'élément de production de file (6) par le biais de la technique des signaux ou de commande.

13. Procédé de séparation de files (3) compressées poussées en avant de façon intermittente dans la direction de file (10) et réalisées à partir de petites pièces végétales, la séparation étant réalisée au moyen d'un moyen de séparation (13) pouvant être déplacé dans le sens de la longueur de la file (3), **caractérisé en ce que** l'extrémité de file (4) avant est détectée dans son avancement dans la direction de file (10), le moyen de séparation (13) étant déplacé de façon commandée dans le sens de la longueur de la file (3) avec un entraînement de roulement (25) et étant positionné par rapport à l'extrémité de file (4) détectée.

14. Procédé selon la revendication 13, **caractérisé en ce que** plusieurs, notamment deux ou trois, processus de séparation sont réalisés les uns à la suite des autres dans la file, avec des mouvements d'avancée à intervalles donnés du moyen de séparation (13) dans le sens de la longueur de la file (3), le moyen de séparation (13) étant déplacé dans le sens contraire de la direction de transport (10) de la file (3).

15. Procédé selon la revendication 13 ou 14, **caractérisé en ce qu'**aucune séparation de la file (3) ne se produit pendant une ou plusieurs courses d'extrusion.
